# EUROPÄISCHE PATENTSCHRIFT

(11) **EP 2 593 329 B1**
(45) Veröffentlichungstag und Bekanntmachung des Hinweises auf die Patenterteilung: **27.08.2014**
(21) Anmeldenummer: 11720464.4
(22) Anmeldetag: 18.05.2011
(51) Int. Cl.: B60N 2/02, B60N 2/06, B60N 2/42, B60N 2/427, F16D 7/04

(54) **VORRICHTUNG ZUR KRAFTBEGRENZUNG FÜR EINEN FAHRZEUGSITZ**
FORCE LIMITING DEVICE FOR A VEHICLE SEAT
DISPOSITIF DE LIMITATION DE FORCE POUR UN SIÈGE DE VÉHICULE

(30) Priorität: 14.07.2010 DE 102010031310
(43) Veröffentlichungstag der Anmeldung: 22.05.2013
(73) Patentinhaber: Robert Bosch GmbH, 70442 Stuttgart (DE)
(72) Erfinder: FREIENSTEIN, Heiko, 71263 Weil Der Stadt (DE); PETER, Gilles, F-67360 Morsbronn Les Bains (FR)
(86) Internationale Anmeldenummer: PCT/EP2011/058015
(87) Internationale Veröffentlichungsnummer: WO 2012/007208

(56) Entgegenhaltungen:
- WO-A2-2008/030747
- CH-A- 432 948
- DE-A1- 3 700 678
- DE-A1- 4 404 866
- DE-A1-102008 017 006
- FR-A1- 2 605 371
- JP-A- 58 142 028

## Beschreibung

### Stand der Technik

### Offenbarung der Erfindung

Die Erfindung betrifft eine Kraftbegrenzung für einen Fahrzeugsitz nach der Gattung des unabhängigen Patentanspruchs.

Aus Adomeit et al. "Das hohe Schutzniveau eines Pre-Crash-Rückhaltesystems und seine breitbandige Wirkung", 7. VDI-Tagung Fahrzeugsicherheit, Berlin, 22. und 23. Oktober 2009 ist es bekannt ein sitzbasiertes Rückhaltemittel zu verwenden, dass als ein Merkmal die Eigenschaft hat, im Frontalcrash kontrolliert und unter Absorption von Energie dem Crashpuls nachzugeben.

Eine gattungsgemässe Vorrichtung zur Kraftbegrenzung ist aus dem Dokument JP-A-58142028 bekannt.

### Offenbarung der Erfindung

Die erfindungsgemäße Vorrichtung zur Kraftbegrenzung für einen Fahrzeugsitz mit den Merkmalen des unabhängigen Patentanspruchs hat demgegenüber den Vorteil, dass die Kraftbegrenzungsmittel einen ersten und einen zweiten Teil eines Übertragungsglieds miteinander verbinden und ab einer vorbestimmten Kraft den ersten und zweiten Teil für die Kraftbegrenzung voneinander entkoppeln. Diese Entkopplung tritt beispielsweise bei einem Frontalcrash ein, und dass dann der Fahrzeugsitz sich mit einer definierten Kraft nach vorne bewegt und nicht ungebremst. Neben der Kraftbegrenzung im Frontcrash ist damit ein kontrollierter Energieabbau möglich. Die erfindungsgemäße ist insbesondere hinsichtlich des Bauraumes und des Gewichts nahezu neutral. Dies bedeutet, dass kaum zusätzliches Gewicht oder Komponenten, die Volumen beanspruchen, hinzugefügt werden.

Die erfindungsgemäße Vorrichtung zur Kraftbegrenzung für ein Fahrzeugsitz sitzt demnach üblicherweise im Getriebe der Sitzverstellung. Kraftbegrenzung bedeutet, wie oben angegeben, dass ab einer vorbestimmten Kraft die in einem Frontalcrash oder einem schweren Crash im allgemeinen Auftritt eine Entkopplung der beiden Teile stattfindet, so dass der Fahrzeugsitz sich nicht ungebremst nach vorne bewegt.

Der Antrieb ist erfindungsgemäss als eine Schnecke vorgesehen, die von einem Elektromotor über eine Welle vorzugsweise eine elastische Welle angetrieben wird.

Dieser Antrieb ist dann mit dem Ubertragungsglied und einer Schnittstelle zur Energieübertragung in Wirkverbindung. Die Schnittstelle dient zur Aufnahme eines Übertragungselements, weil das Übertragungselement zur Bewegung des Fahrzeugsitzes in Fahrzeuglängsrichtung vorgesehen ist. Bei der Schnittstelle handelt es sich erfindungsgemäss um ein Gewinde zur Aufnahme einer Spindel, die das Ubertragungselement ist. Das Ubertragungsglied ist erfindungsgemäss ein Schneckenrad. Zur Energieübertragung werden hier möglicherweise Zahnradwirkverbindungen verwendet.

Die Wirkverbindung bedeutet vorliegend, dass die Verbindung zwischen dem Antrieb und dem Übertragungsglied einerseits und dem Übertragungsglied andererseits zur Energieübertragung geeignet ist.

Die Kraftbegrenzungsmittel sind in den abhängigen Ansprüchen näher definiert. Kern der vorliegenden Erfindung ist das Ubertragungsglied, also das Schneckenrad, in zwei Teile aufzuteilen und diese durch die Kraftbegrenzungsmittel miteinander zu verbinden, wobei diese Kraftbegrenzungsmittel ab eben der vorbestimmten Kraft diese beiden Teile voneinander entkoppeln. Die Kraftbegrenzungsmittel sind nicht nur für lineare Kräfte, sondern auch für Drehmomente anwendbar. Eine typische vorgegebene Kraft ist beispielsweise 2000N.

Durch die in den abhängigen Ansprüchen angegebenen Maßnahmen und Weiterbildungen sind vorteilhafte Verbesserungen der im unabhängigen Patentanspruch angegebenen Vorrichtung zur Kraftbegrenzung für einen Fahrzeugsitz möglich.

Erfindungsgemäss weisen die Kraftbegrenzungsmittel wenigstens ein elastisches Element und ein unelastisches Element auf, wobei beide Elemente miteinander verbunden sind, beispielsweise stoff-, kraft- oder formschlüssig und das wenigstens eine elastische Element, das mit dem ersten Teil verbunden ist, das unelastische Element in eine Ausnehmung des zweiten Teiles drückt. Gemäss einer nicht benanspruchten Ausführung kann jedoch auch umgekehrt der Fall sein, also dass das elastische Element das unelastische Element in eine Ausnehmung des ersten Teiles drückt, wobei dann das elastische Element mit dem zweiten Teil verbunden ist. Notwendigerweise ist zumindest ein elastisches Element mit einem unelastischen Element vorgesehen, es ist jedoch vorteilhaft mehrerer solcher Kombinationen zu verwenden. Damit kann dann auch das notwendige Kraftniveau beziehungsweise Drehmomentniveau eingestellt werden, ab der Entkopplung der beiden Teile erfolgt.

Unter dem elastischen Element ist üblicherweise ein Federelement und unter dem unelastischen Element eine Kugel oder ein anderes Volumenelement zu verstehen, dass die Eigenschaft hat, nicht elastisch verformt zu werden. Die Federkraft definiert demnach dann die vorbestimmte Kraft, ab der die Entkopplung erfolgt.

Vorteilhafterweise ist das unelastische Element derart angeordnet oder geformt, dass dieses unelastische Element in eine erste Drehrichtung der beiden Teile zueinander eine Kraftbegrenzung und in eine zweite Drehrichtung eine Sperrung bewirkt. Dieses richtungsabhängige Verhalten kann -wie gesagt- durch eine entsprechende Anordnung oder Verformung des unelastischen Elements bestimmt werden. Damit kann beispielsweise bei einem Frontcrash eine Kraftbegrenzung erfolgen und bei einem Heckcrash eine Sperrung. Damit kann auf die besonderen Auswirkungen auf die Fahrzeuginsassen durch einen Frontcrash beziehungsweise einen Heckcrash eingegangen werden. Wie oben bereits angegeben, ist der Antrieb als eine Schnecke ausgebildet, das Ubertragungsglied als ein Schneckenrad mit einem Innengewinde als Schnittstelle und die Ausnehmung eine Mulde einer Außenverzahnung des Schneckenrads. Die Schnecke ist schraubenförmig mit einem Gewinde versehen, in die die Außenverzahnung des Schneckenrades greift. Die Gesamtstruktur wird als Schneckengetriebe bezeichnet und besteht eben aus einer mit einem oder mehreren Schraubengängen versehenen Welle, nämlich der Schnecke und einem darin kämmenden schräg verzahnten Rad, eben dem Schneckenrad. Die Achsen der beiden sind um 90° versetzt. Kennzeichnend für das Schneckengetriebe ist die sogenannte Selbsthemmung, die durch eine Gleitreibung zwischen der Schnecke und dem Schneckenrad eintritt, jedoch nur bei geringen Gangzahlen der Schnecke.

Weiterhin ist vorteilhaft, dass Sperrmittel vorgesehen sind, die Teil der Vorrichtung sind und die mittels eines ersten Steuersignals aktivierbar sind und die Entriegelung des ersten und des zweiten Teils zueinander bewirken. Solche Sperrmittel sind beispielsweise Stifte oder Bolzen, die die Reaktivbewegung zwischen den beiden Teilen insbesondere eine Drehung verhindern. Das Steuersignal kann von einem Airbagsteuergerät oder einem anderen Steuergerät stammen, die eine mechanische, elektrische, pneumatische oder pyrotechnische Entriegelung ermöglicht. Das heißt, durch das Steuersignal erfolgt eine Entsperrung des ersten und des zweiten Teils. Dies bewirkt eine weitere Absicherung der erfindungsgemäßen Vorrichtung.

Auch die Kraftbegrenzungsmittel können vorteilhafterweise mittels eines zweiten Steuersignals aktivierbar sein. Die Ansteuerung kann wie die des Sperrmittels ausgebildet sein.

Es ist weiterhin vorteilhaft, dass auch noch Begrenzungsmittel vorgesehen sind, die eine Relativbewegung zwischen dem ersten und dem zweiten Teil bis zu einem vorgegebenen Maß begrenzen. Das heißt beispielsweise, wenn im ersten Teil ein Stift angeordnet ist und im zweiten Teil eine Rille, diese Rille jedoch nur eine begrenzte Drehung zulässt, dann können sich der erste und der zweite Teil nur in dem Umfang drehen, wie es der Stift in der Rille zulässt. Eine weitere Ausführungsform ist, dass ein Band um einen Teil gewickelt wird und am anderen Teil befestigt ist, nach einer gewissen Umdrehungszahl festgezogen wird. Auch dies führt zu einer Begrenzung der Bewegung der beiden Teile zueinander.

Schließlich ist es auch von Vorteil, dass die Vorrichtung in ein System eingebettet ist mit einem Elektromotor, der über eine elastisch ausgebildete Welle mit dem Antrieb verbunden ist, um diesen Antrieb anzutreiben und einer Spindel aus dem Übertragungselement, auf dem sich dann der Sitz in Fahrzeuglängsrichtung bewegt. Der Elektromotor ist zentral in bezug auf den möglichen Verschiebeweg des Sitzes angeordnet.

Ausführungsbeispiele der Erfindung sind in der Zeichnung dargestellt und werden in der nachfolgenden Beschreibung näher erläutert.

Es zeigen
Figur 1 eine schematische Darstellung einer erfindungsgemäßen Vorrichtung mit Elektromotor und flexibler Welle und Spindel,
Figur 2 eine schematische Seitenansicht eines Schneckenrads mit den beiden Teilen und der Drehmomentbegrenzung,
Figur 3 eine erste Ausführungsform der Kraftbegrenzungsmittel und
Figur 4 eine zweite Ausführungsform der Kraftbegrenzungsmittel

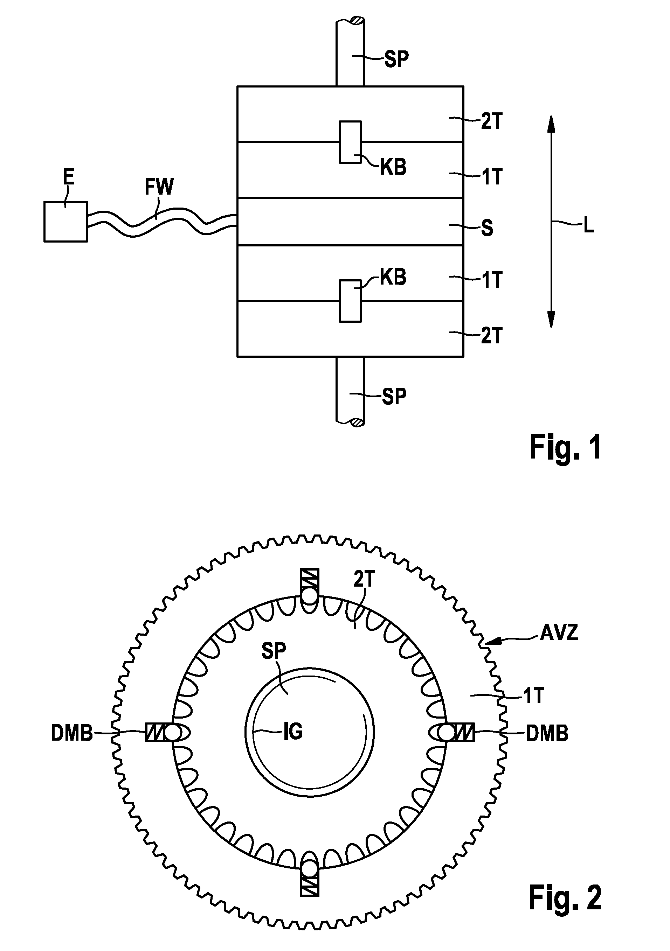

Figur 1 zeigt eine schematische Darstellung der erfindungsgemäßen Vorrichtung mit den angeschlossenen Elementen nämlich einer flexiblen Welle FW, die einen Elektromotor mit einer Schnecke S der erfindungsgemäßen Vorrichtung verbindet. Die Schnecke S ist in Wirkverbindung mit einem Schneckenrad, das jeweils aus zwei Teilen, nämlich einem ersten Teil 1T und einem zweiten Teil 2T besteht. Die erfindungsgemäßen Kraftbegrenzungsmittel KB verbinden die beiden Teile 1T und 2T miteinander. Das Schneckenrad ist über ein nicht dargestelltes Gewinde eingeschraubt, in Längsrichtung L der Spindel SP erfolgt die Bewegungsrichtung des Sitzes.

Der Elektromotor E überträgt über die flexible Windel FW als Drehbewegung Energie an die Schnecke S, die diese Drehbewegung an das Schneckenrad im ersten Teil 1T weitergibt. Über die Kraft- bzw. formschlüssige Kopplung durch die Kraftbegrenzungsmittel KB wird diese Energie weiter übertragen an den jeweils zweiten Teil 2T und dann über das Gewinde an die Spindel SP.

Kommt es zum Crash, dann führt der Crashpuls dazu, dass über den Sitz beziehungsweise die Spindel SP der zweite Teil 2T des Schneckenrades mit dem Crashpuls beaufschlagt wird, der über der vorbestimmten Kraft liegt, ab der die Kraftbegrenzungsmittel KB den ersten und den zweiten Teil 1T, 2T voneinander entkoppeln. Dies tritt demnach ein und so wirkt der Crashpuls nicht auf die Schnecke S, so dass der Sitz sich nicht ungebremst in Längsrichtung L bewegt.

Figur 2 zeigt in einer schematischen Darstellung das Schneckenrad mit den beiden Teilen 1T und 2T den Kraftbegrenzungsmitteln nunmehr als Drehbegrenzungsmitteln DMB ausgeführt, der Außenverzahnung AVZ vom ersten Teil 1T und dem Innengewinde IG, das zur Verschraubung der Spindel SP verwendet wird. Die Drehbegrenzungsmittel DMB bestehen -wie dargestellt- aus einem elastischen Element und einem unelastischen Element, wobei das elastische Element, üblicherweise eine Feder, das unelastische Element vorwiegend eine Kugel, in eine Mulde eines Zahnrads, die Außenverzahnung des zweiten Teils, drückt. Vorliegend sind vier solche Kraftbegrenzungsmittel vorgesehen, so dass die notwendige Kraft, um die diese Kraftbegrenzungsmittel zur Entkopplung zu führen, vierfach der Kraft eines einzelnen Kraftbegrenzungsmittels entspricht.

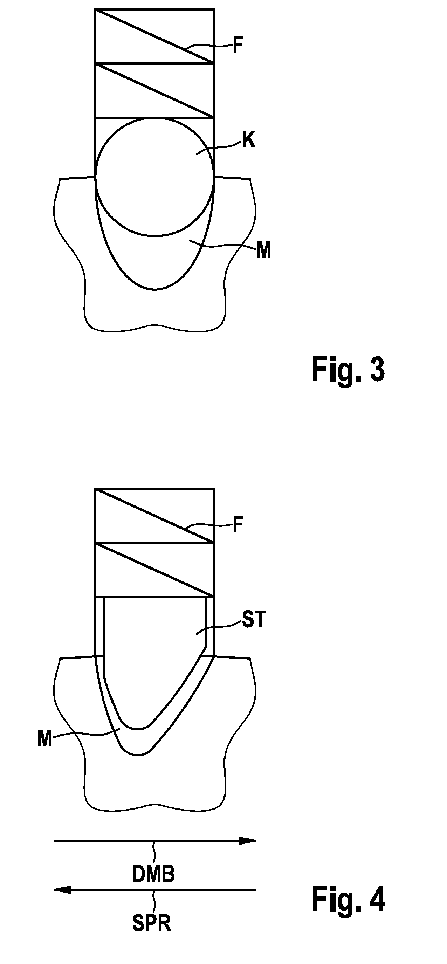

Figur 3 zeigt eine erste Ausführungsform des Kraftbegrenzungsmittels. Eine Feder F ist mit einer Kugel K verbunden, die in die Mulde M durch die Feder F gedrückt wird. Zweite Ausführungsform ist in Figur 4 gezeigt. Nunmehr drückt die Feder F einen Stift ST in eine Mulde M, wobei der Stift ST derart geformt ist, dass in die dargestellte Richtung DMB, also nach rechts eine Drehmomentenbegrenzung erfolgt und in die Richtung nach links eine mit SPR bezeichnete Sperrung. Damit kann auch Front- beziehungsweise Heckcrashs angepasst auf den jeweiligen Crashtyp reagiert werden.

## Patentansprüche

1. Vorrichtung zur Kraftbegrenzung für ein Fahrzeugsitz mit:
- einem Antrieb (S), der von einem Elektromotor (E) antreibbar ist
- eine Schnittstelle (IG) zur Aufnahme eines Übertragungselements (SP), wobei das Übertragungselement (SP) zur Bewegung des Fahrzeugsitzes in Fahrzeuglängsrichtung (L) vorgesehen ist
- einem Übertragungsglied, das mit dem Antrieb (S) und mit der Schnittstelle (IG) zur Energieübertragung in Wirkverbindung steht Kraftbegrenzungsmittel (KB), die einen ersten und einen zweiten Teil (1T, 2T) des Übertragungsglieds miteinander verbinden und ab einer vorbestimmten Kraft den ersten und den zweiten Teil (1T, 2T) für die Kraftbegrenzung voneinander entkoppeln, **dadurch gekennzeichnet, dass** der Antrieb eine Schnecke (S) als Sitzlängsantrieb und das Übertragungsglied ein Schneckenrad mit einem Innengewinde (IG) als Schnittstelle ist, und das Übertragungselement als Spindel (SP) einer Sitzlängsverstellung ausgebildet ist, wobei die Schnecke (S) die Drehbewegung an den ersten Teil (1T) des Schneckenrads auf dessen Außenverzahnung (AVZ) überträgt, und die Kraftbegrenzungsmittel (KB) wenigstens ein elastisches Element (F) und ein unelastisches Element (K) ausweisen, wobei beide Elemente miteinander verbunden sind, und das wenigstens eine elastische Element (F), das mit dem ersten Teil (1T) verbunden ist, das unelastische Element (K) in einer Ausnehmung (M) des zweiten Teils (2T) des Schneckenrads drückt.

2. Vorrichtung nach Anspruch 1, **dadurch gekennzeichnet, dass** die Ausnehmung eine Mulde (M) einer Außenverzahnung des Schneckenrades ist.

3. Vorrichtung nach Anspruch 2, **dadurch gekennzeichnet, dass** das unelastische Element (K) derart angeordnet ist, dass dieses unelastische Element in eine erste Drehrichtung der beiden Teile (1T, 2T) zueinander eine Kraftbegrenzung und in eine zweite Drehrichtung eine Sperrung bewirkt.

4. Vorrichtung nach einem der vorhergehenden Ansprüche, **dadurch gekennzeichnet, dass** beim Eintritt eines Crashfalls des Fahrzeugs sich der Sitz nicht ungebremst in Längsrichtung bewegt, sondern ein kontrollierter Energieabbau durch die Kraftbegrenzungsvorrichtung erfolgt.

5. Vorrichtung nach einem der vorhergehenden Ansprüche, dass Sperrmittel vorgesehen sind, die mittels eines ersten Steuerimpulses aktivierbar sind und dann die Entriegelung des ersten und des zweiten Teils (1T, 2T) zueinander bewirken.

6. Vorrichtung nach Anspruch 1, **dadurch gekennzeichnet, dass** die Kraftbegrenzungsmittel (KB) mittels eines zweiten Steuersignals aktivierbar sind.

7. Vorrichtung nach einem der vorhergehenden Ansprüche **dadurch gekennzeichnet, dass** Begrenzungsmittel vorgesehen sind, die eine Relativbewegung zwischen dem ersten und dem zweiten Teil (1T, 2T) bis zu einem vorgegebenen Maß begrenzen.

8. Vorrichtung nach Anspruch 7, **dadurch gekennzeichnet, dass** die Begrenzungsmittel einen Stift und eine Rille aufweisen, wobei der Stift in die Rille eingreift und die Bewegung des Stifts in der Rille die Relativbewegung begrenzt.

9. Vorrichtung nach Anspruch 7, **dadurch gekennzeichnet, dass** die Begrenzungsmittel ein Band aufweisen, das zur Begrenzung der Relativbewegung festgezogen wird.

10. System mit einer Vorrichtung nach einem der Ansprüche 1 bis 9 und einem Elektromotor (E), der über ein elastisch ausgebildete Welle (FW) mit dem Antrieb (S) verbunden ist.

## Claims

1. Force-limiting device for a vehicle seat, with:
- a drive (S) which is driveable by an electric motor (E),
- an intersection (IG) for receiving a transmission element (SP), wherein the transmission element (SP) is provided for moving the vehicle seat in the longitudinal direction (L) of the vehicle,
- a transmission member which is operatively connected to the drive (S) and to the intersection (IG) in order to transmit energy,
force-limiting means (KB) which connect a first and a second part (1T, 2T) of the transmission member to each other and, from a predetermined force, decouple the first and the second part (1T, 2T) from each other in order to limit the force, **characterized in that** the drive is a worm (S) in the form of a seat longitudinal drive and the transmission member is a worm wheel with an internal thread (IG) in the form of an intersection, and the transmission element is designed as a spindle (SP) of a seat longitudinal adjustment means, wherein the worm (S) transmits the rotational movement to the first part (1T) of the worm wheel, on the external toothing (AVZ) thereof, and the force-limiting means (KB) has at least one elastic element (F) and an inelastic element (K), wherein the two elements are connected to each other, and the at least one elastic element (F), which is connected to the first part (1T), presses the inelastic element (K) into a recess (M) of the second part (2T) of the worm wheel.

2. Device according to Claim 1, **characterized in that** the recess is a trough (M) of an external toothing of the worm wheel.

3. Device according to Claim 2, **characterized in that** the inelastic element (K) is arranged in such a manner that said inelastic element brings about a limiting of the force in a first direction of rotation of the two parts (1T, 2T) with respect to each other and brings about a blocking in a second direction of rotation.

4. Device according to one of the preceding claims, **characterized in that**, in the event of the onset of a crash situation involving the vehicle, the seat does not move in an unbraked manner in the longitudinal direction, but rather energy is dissipated in a controlled manner by the force-limiting device.

5. Device according to one of the preceding claims, **characterized in that** blocking means which are activateable by means of a first control pulse and then bring about the unlocking of the first and second parts (1T, 2T) from each other are provided.

6. Device according to Claim 1, **characterized in that** the force-limiting means (KB) are activateable by means of a second control signal.

7. Device according to one of the preceding claims, **characterized in that** limiting means which limit a relative movement between the first and the second part (1T, 2T) up to a predetermined amount are provided.

8. Device according to Claim 7, **characterized in that** the limiting means have a pin and a groove, wherein the pin engages in the groove and the movement of the pin in the groove limits the relative movement.

9. Device according to Claim 7, **characterized in that** the limiting means have a band which is tightened in order to limit the relative movement.

10. System with a device according to one of Claims 1 to 9 and with an electric motor (E) which is connected to the drive (S) via a shaft (FW) of elastic design.

## Revendications

1. Dispositif de limitation de force pour un siège de véhicule, comprenant :
- un entraînement (S) qui peut être entraîné par un moteur électrique (E),
- une interface (IG) pour recevoir un élément de transfert (SP), l'élément de transfert (SP) étant prévu pour déplacer le siège de véhicule dans la direction longitudinale du véhicule (L),
- un organe de transfert qui est en liaison fonctionnelle avec l'entraînement (S) et avec l'interface (IG) pour transférer de l'énergie,
- des moyens de limitation de force (KB), qui relient entre elles une première et une deuxième partie (1T, 2T) de l'organe de transfert et désaccouplent l'une de l'autre la première et la deuxième partie (1T, 2T) à partir d'une force prédéterminée en vue de réaliser la limitation de force, **caractérisé en ce que** l'entraînement est une vis sans fin (S) en tant qu'entraînement longitudinal du siège et l'organe de transfert est une roue à denture hélicoïdale avec un filetage interne (IG) en tant qu'interface, et l'élément de transfert est réalisé sous forme de broche (SP) d'un réglage longitudinal du siège, la vis sans fin (S) transférant le mouvement de rotation à la première partie (1T) de la roue à denture hélicoïdale à sa denture extérieure (AVZ), et les moyens de limitation de force (KB) présentant au moins un élément élastique (F) et un élément non élastique (K), les deux éléments étant reliés l'un à l'autre, et l'au moins un élément élastique (F), qui est connecté à la première partie (1T), pressant l'élément non élastique (K) dans un évidement (M) de la deuxième partie (2T) de la roue à denture hélicoïdale.

2. Dispositif selon la revendication 1, **caractérisé en ce que** l'évidement est un creux (M) d'une denture extérieure de la roue à denture hélicoïdale.

3. Dispositif selon la revendication 2, **caractérisé en ce que** l'élément non élastique (K) est disposé de telle sorte que cet élément non élastique provoque une limitation de force dans un premier sens de rotation des deux parties (1T, 2T) l'une par rapport à l'autre et provoque un blocage dans un deuxième sens de rotation.

4. Dispositif selon l'une quelconque des revendications précédentes, **caractérisé en ce que** lors d'une collision du véhicule, le siège ne se déplace pas de manière non freinée dans la direction longitudinale mais il se produit une diminution contrôlée d'énergie par le biais du dispositif de limitation de force.

5. Dispositif selon l'une quelconque des revendications précédentes, **caractérisé en ce que** des moyens de blocage sont prévus, lesquels peuvent être activés au moyen d'une première impulsion de commande et provoquent ensuite le déverrouillage de la première et de la deuxième partie (1T, 2T) l'une par rapport à l'autre.

6. Dispositif selon la revendication 1, **caractérisé en ce que** les moyens de limitation de force (KB) peuvent être activés au moyen d'un deuxième signal de commande.

7. Dispositif selon l'une quelconque des revendications précédentes, **caractérisé en ce que** des moyens de limitation sont prévus, lesquels limitent un mouvement relatif entre la première et la deuxième partie (1T, 2T) jusque dans une mesure prédéfinie.

8. Dispositif selon la revendication 7, **caractérisé en ce que** les moyens de limitation présentent une goupille et une gorge, la goupille s'engageant dans la gorge et le mouvement de la goupille dans la gorge limitant le mouvement relatif.

9. Dispositif selon la revendication 7, **caractérisé en ce que** les moyens de limitation présentent une bande qui est tirée fermement pour limiter le mouvement relatif.

10. Système comprenant un dispositif selon l'une quelconque des revendications 1 à 9 et un moteur électrique (E) qui est connecté à l'entraînement (S) par le biais d'un arbre réalisé sous forme élastique (FW).
